# EUROPÄISCHE PATENTSCHRIFT

(11) **EP 2 727 689 B1**
(45) Veröffentlichungstag und Bekanntmachung des Hinweises auf die Patenterteilung: **01.05.2019**
(21) Anmeldenummer: 13187776.3
(22) Anmeldetag: 08.10.2013
(51) Int. Cl.: B25J 15/00, B65G 47/08, B65G 47/90, B65G 47/26, B65B 35/36

(54) **Einem Förderabschnitt zur Artikelförderung zugeordnete Anordnung mit wenigstens zwei Handhabungseinrichtungen und Verfahren zu deren Steuerung**
Arrangement comprising at least two handling devices assigned to a conveyor section for conveying articles and method for controlling such an arrangement
Arrangement comprenant au moins deux dispositifs de manipulation, assigné à une section d'un convoyeur pour le transport d'articles, et procédé de commande d'un tel arrangement

(30) Priorität: 31.10.2012 DE 102012219886
(43) Veröffentlichungstag der Anmeldung: 07.05.2014
(73) Patentinhaber: Krones Aktiengesellschaft, 93073 Neutraubling (DE)
(72) Erfinder: Palumbo, Pino-Giuseppe, 93073 Neutraubling (DE)
(74) Vertreter: Benninger, Johannes

(56) Entgegenhaltungen:
- WO-A1-2010/089783
- DE-A1- 4 208 818
- DE-A1-102004 020 891
- US-A1- 2003 136 641

## Beschreibung

Die vorliegende Erfindung betrifft eine Anordnung mit wenigstens zwei Handhabungseinrichtungen mit den Oberbegriffs-Merkmalen des unabhängigen Anspruchs 1, die einem Förderabschnitt einer Vorrichtung zur Förderung, Handhabung, Gruppierung, Palettierung und/oder Verpackung von Artikeln, Stückgütern, Gruppierungen und/oder Gebinden zugeordnet ist. Die Erfindung betrifft zudem ein Verfahren mit den Oberbegriffs-Merkmalen des unabhängigen Verfahrensanspruchs 6 zur Steuerung einer derartigen Anordnung.

Bekannte und oftmals in der Praxis eingesetzte Varianten von Palettieranlagen bestehen aus einer Gruppierstation bzw. einem Gruppiermodul und einer Handhabungseinrichtung, die auch als Palettierroboter bezeichnet werden kann. Meist weisen diese bekannten Gruppierstationen eine Zufördereinrichtung und einen rechtwinkelig dazu angeordneten Lagenbildungstisch auf. Der Lagenbildungstisch kann einen sog. Reihenschieber aufweisen, welcher die fertig gebildeten Artikellagen an eine Beladeeinrichtung überschiebt. Die Handhabungseinrichtung bzw. das Gruppiersystem kann bspw. einen Portalroboter mit einem Förderband aufweisen. Von einem parallel angeordneten Zuführband werden die Gebinde mittels des Manipulators des Palettierroboters auf dem Förderband verschoben und/oder gedreht, so dass sie jeweils in eine gewünschte Position gebracht werden können, um Teile einer fertigen Lage bilden zu können. Anschließend wird die fertig gebildete Lage mit dem Reihenschieber in die Beladestation übergeschoben.

Bei einer weiteren bekannten Variante von Palettieranlagen werden sog. Knickarm-Roboter eingesetzt, die seitlich an einem Fördermittel angeordnet sind. Diese Knickarm-Roboter können die Gebinde in ähnlicher Weise gruppieren wie die oben erwähnten Palettierroboter, so dass auch der Ablauf der Lagenbildung ähnlich erfolgt.

Die EP 2 204 342 B1 offenbart ein weiteres Gruppiermodul. Hierbei handelt es sich um ein sog. Flaschengruppiermodul, bestehend aus einem Tisch, einem mittig darüber angeordneten und sich über die gesamte Tischlänge erstreckenden Fördermittel, und einer Portalbrücke mit einem Greifer.

Solche bekannten Portalroboter weisen einen relativ großen Raumbedarf auf; aufgrund ihrer Bauhöhe neigen sie zudem bei schnellen Verschiebebewegungen zur Ausbildung von Resonanzeffekten bzw. zum Aufschwingen. Der Arbeitsbereich eines Portalroboters ist nur innerhalb des Portals möglich, mithin also in Förderrichtung begrenzt. Auch bei den häufig eingesetzten Knickarm-Robotern ist der Arbeitsbereich auf den maximalen Schwenkbereich des Roboters begrenzt. Bei beiden Varianten ist keine Verschiebung des Arbeitsbereichs möglich. Um den Arbeitsbereich eines Knickarm-Roboters auszudehnen, müsste dieser demontiert und an einem anderen Montageort neu aufgestellt werden. Darüber hinaus ist der Arbeitsbereich eines Knickarm-Roboters hinsichtlich der Tischbreite eingeschränkt, weshalb solche Knickarm-Roboter oftmals in doppelter Ausführung verwendet werden, bei denen sich zwei solcher Roboter an beiden Längsseiten eines Horizontalförderabschnittes befinden, deren Arbeitsbereiche sich überschneiden.

Ein weiteres Beispiel für ein Portalsystem stellt die DE 10 2004 020 891 A1 dar, in welcher mehrere, entlang eines verschiedene Arbeitsstationen überspannenden Rahmens angeordnete und entlang dieses Rahmens verfahrbare Handhabungseinrichtungen mit austauschbaren Werkzeugen Artikel, Verpackungsmittel u. dgl. transportieren bzw. an den Arbeitsstationen behandeln können. Die Arbeitsstationen sind ortsfest angeordnet, können verfahrenstechnisch voneinander unabhängig ausgelegt sein und sind nicht durch weitere Fördereinrichtungen miteinander verbunden.

Herkömmliche Portalsysteme können nur Positionieraufgaben erledigen. Die Artikel werden von einem Greifer aufgenommen, gedreht und/oder verschoben. Ein Wechsel zu einer anderen Funktionsaufgabe wie bspw. das Zentrieren und/oder Überschieben einer Lage ist dagegen nicht möglich. Bei einer mechanischen oder steuerungstechnischen Störung des Portalroboters oder des Knickarm-Roboters sind normalerweise manuelle Eingriffe zur Behebung der Störung notwendig, was jedoch in der Praxis einen erheblichen Aufwand bedeutet. So muss der bewegliche Arm eines Knickarm- oder eines Portalroboters zunächst durch einen Steuerungseingriff bewegt werden, was dazu führt, dass die Störung bei einem Ausfall der Elektrik nur schwer beseitigt werden kann. Bei Störungen mit mechanischen oder elektrischen Ursachen wie bspw. bei einer defekten Linearführung oder einem defekten Servomotor kann meist kein schneller Austausch der betroffenen Komponenten oder Module erfolgen. Zur Behebung der Störung müssen die einzelnen Komponenten demontiert, ausgebaut und ihre Anschlussverbindungen getrennt werden. Im Anschluss daran müssen die neuen funktionierenden Teile wieder eingebaut und in Betrieb genommen werden. In diesem Zusammenhang ist es notwendig, die einzelnen Bewegungsachsen der Manipulatoren neu zu kalibrieren.

Einen anderen Ansatz zur Positionierung von Artikeln mit den Oberbegriffs-Merkmalen der Ansprüche 1 und 6 offenbart die Transport- und Verpackungseinrichtung der US 2003/0136641 A1, in welcher seitlich zugeführte Einzelartikel mittels ineinander kämmender Halteelemente auf einem Transportband hintereinander angeordnet und entlang der Transportrichtung gegen einen auf dem Transportband befindlichen Anschlag geschoben werden, bis eine vorgesehene Anzahl von Artikeln in der so erzeugten Gruppe erreicht ist, woraufhin diese in einen seitlich des Transportbands zugeführten Umkarton geschoben werden kann. Die ineinander kämmenden Halteelemente sind dabei an einer dem Zufuhrpunkt der Einzelartikel gegenüberliegenden Halterung angeordnet und greifen von oben kommend in den Artikelstrom ein.

Ein vorrangiges Ziel der Erfindung besteht darin, einen Förderabschnitt einer Vorrichtung zur Förderung, Handhabung, Gruppierung, Palettierung und/oder Verpackung von Artikeln, Stückgütern, Gruppierungen und/oder Gebinden mit zugeordneten Handhabungseinrichtungen zur Verfügung zu stellen, die eine erhöhte Flexibilität hinsichtlich ihrer Bewegungsbereiche als auch hinsichtlich der Reparaturfreundlichkeit und/oder Austauschbarkeit bei auftretenden Störungen aufweisen. Weiterhin besteht das Ziel der Erfindung in einer verbesserten Ansteuerbarkeit und/oder Handhabbarkeit eines solchermaßen ausgestatteten Förderabschnittes.

Das genannte Ziel der Erfindung wird mit dem Gegenstand der unabhängigen Ansprüche erreicht. Merkmale vorteilhafter Weiterbildungen der Erfindung lassen sich den abhängigen Ansprüchen und den Ausführungsbeispielen entnehmen. So schlägt die Erfindung zur Erreichung des oben genannten Ziels eine Anordnung gemäß dem Anspruch 1 mit zwei oder mehr gleichartigen oder unterschiedlichen Handhabungseinrichtungen vor, die einem Förderabschnitt einer Vorrichtung zur Förderung, Handhabung, Gruppierung, Palettierung und/oder Verpackung von Artikeln, Stückgütern, Gruppierungen und/oder Gebinden zugeordnet sind und/oder Teil dieser Vorrichtung sind. Jede der zwei oder mehr Handhabungseinrichtungen weist jeweils einen entlang einer Förderrichtung einer Horizontalfördereinrichtung beweglichen Rahmen mit wenigstens einem daran beweglich angeordneten oder aufgehängten Manipulationselement zur Handhabung, Verschiebung oder sonstigen Wechselwirkung von/mit auf der Horizontalfördereinrichtung transportierten Artikeln, Stückgütern, Gruppierungen und/oder Gebinden auf.

Die Bewegungsräume der zwei oder mehr Handhabungseinrichtungen überdecken sich zumindest teilweise, so dass keine eindeutige räumliche Zuordnung einer bestimmten Handhabungseinrichtung zu einem abgegrenzten Längen- und/oder Breitenabschnitt der Horizontalfördereinrichtung mehr gegeben ist, sondern eine flexible Zuordnung. Jede der Handhabungseinrichtungen kann somit in definierbaren Grenzen entlang der Horizontalfördereinrichtung hin und her verfahren bzw. bewegt werden, und zwar in einer Weise, dass sich die Bewegungsbereiche benachbarter Handhabungseinrichtungen über kurze Abschnitte oder auch über längere Abschnitte überdecken können. Wahlweise können sich auch die Bewegungsbereiche von drei oder mehr Handhabungseinrichtungen gegenseitig überdecken. Auf diese Weise ist einerseits eine erhöhte Flexibilität der Bewegungssteuerung der einzelnen Handhabungseinrichtungen gegeben, was zu erheblich schnelleren Sortier- und Lagenbildungsprozessen beitragen kann, da sich die Bewegungssteuerungen aufeinander folgender Handhabungseinrichtungen in hochflexibler Weise aufeinander abstimmen lassen. So kann bspw. bei einem relativ weiten Verschiebeweg eines Artikels, der mit einer ersten Handhabungseinrichtung zurückzulegen ist, die nachfolgende Handhabungseinrichtung in Förderrichtung ausweichen, um nicht mit der noch mit der Verschiebung des Artikels betrauten ersten Handhabungseinrichtung zu kollidieren. In gleicher Weise kann eine nur einen kurzen Verschiebe- oder Rotationsweg durchzuführende Handhabungseinrichtung nach Zurücklegen eines sehr kurzen Translationswegs entlang der Fördereinrichtung wieder zurückbewegt werden, um einer benachbarten Handhabungseinrichtung Platz zu machen, die einen umfangreicheren Manipulationsvorgang bei der Umsortierung, Drehung, Translation etc. von einem Artikel oder von mehreren Artikeln durchzuführen hat.

Andererseits lassen sich die flexibel handhabbaren und über variabel definierbare Verschiebe- und/oder Transportwege bewegbaren Handhabungseinrichtungen bei Bedarf schnell und unkompliziert von der Basisvorrichtung, der oben definierten Vorrichtung zur Förderung, Handhabung, Gruppierung, Palettierung und/oder Verpackung von Artikeln, Stückgütern, Gruppierungen und/oder Gebinden trennen und entfernen. Dies kann bspw. der Fall sein, wenn bei einer Produktumstellung nur wenige Handhabungseinrichtungen benötigt werden. Dies kann jedoch gleichermaßen bei einem auftretenden Defekt oder einer mechanischen und/oder steuerungstechnischen Störung einer der Handhabungseinrichtungen der Fall sein. Durch einfaches Abheben und Austauschen der Handhabungseinrichtungen können Defekte und Störungen schnell behoben werden und führen dadurch nicht zu einem längeren Maschinenausfall.

Von Vorteil ist es weiterhin, wenn zumindest eine der wenigstens zwei Handhabungseinrichtungen von der Vorrichtung abnehmbar und von dieser trennbar ist. Auf diese Weise kann die schnelle Austauschbarkeit und Entfernbarkeit einzelner defekter Handhabungseinrichtungen ggf. auch vorteilhaft dazu genutzt werden, die Vorrichtung mit reduzierter Verarbeitungskapazität weiter zu betreiben, wenn bspw. keine Ersatzeinrichtung zur Verfügung steht. In diesem Fall können die Bewegungsbereiche der verbleibenden Handhabungseinrichtungen - ggf. sogar der einzigen verbleibenden Handhabungseinrichtung - modifiziert und angepasst werden, wobei gleichzeitig die Fördergeschwindigkeit der Horizontalfördereinrichtung in angemessener Weise zu reduzieren ist. In der Praxis würde dies dann z.B. bedeuten, dass beim Entfernen von einer der mindestens zwei Handhabungseinrichtungen die noch verbleibende einzige Handhabungseinrichtung den Bewegungsbereich beider zuvor in Betrieb befindlichen Handhabungseinrichtungen abdeckt und übernimmt. Dennoch kann die Grundfunktionalität der Vorrichtung ohne weitere Einschränkungen aufrecht erhalten werden, da die Bewegungsmöglichkeiten der verbleibenden Manipulatoren und der flexibel anpassbare Verschiebeweg der verbleibenden Handhabungseinrichtungen die uneingeschränkte Aufrechterhaltung aller zuvor vorhandenen Funktionen erlaubt, wenn auch mit reduzierter Bearbeitungsgeschwindigkeit.

Ein weiterer Vorteil der erfindungsgemäßen Anordnung mit wenigstens zwei variabel zu steuernden und zu bewegenden Handhabungseinrichtungen besteht darin, dass sich die Arbeitsbereiche der Handhabungseinrichtungen entlang der Horizontalfördereinrichtung in weiten Grenzen an die jeweiligen Erfordernisse anpassen lassen. So können je nach zu verarbeitenden Artikeln, Stückgütern, Gruppierungen und/oder Gebinden sowie je nach gewünschter Lagengröße von daraus zu bildenden Palettenlagen, Großgebindeanordnungen etc. auch entsprechend unterschiedliche Arbeitsbereiche der einzelnen Handhabungseinrichtungen eingestellt werden. Die Paletten- oder Gebindegrößen und -ausdehnungen sind zumindest in Förderrichtung der Horizontalfördereinrichtung nicht mehr von den Bewegungsbereichen einzelner Portalroboter abhängig, sondern können aufgrund der flexibel verschiebbaren bzw. definierbaren Bewegungsbereiche der Handhabungseinrichtungen gleichermaßen flexibel gehandhabt werden. So ist es demnach möglich, die zu gruppierende fertige Gebindelage je nach Größe der fertigen Gebindelage in Laufrichtung auf der Horizontalfördereinrichtung zu einem früheren Zeitpunkt fertigzustellen. Entscheidend durch die flexibel verschiebbaren bzw. definierbaren Bewegungsbereiche der Handhabungseinrichtungen ist, dass die Position der fertig gruppierten Gebindelage in Laufrichtung auf der Horizontalfördereinrichtung je nach Abmessungen der fertig gruppierten Gebindelage variabel ist. Dies ermöglicht wiederum einen früheren Beginn eines Gruppiervorganges der Handhabungseinrichtungen für die nächste zu gruppierende Gebindelage, so dass sich bei entsprechend höherer Fördergeschwindigkeit der Horizontalfördereinrichtung ein höherer Gebindedurchsatz erreichen lässt.

Der Rahmen jeder Handhabungseinrichtung stützt sich erfindungsgemäß beidseitig der Längsseiten der Horizontalfördereinrichtung ab und ist dort verschiebbar und/oder rollbar gelagert. So können der Rahmen jeder Handhabungseinrichtung und der Förderabschnitt jeweils mit korrespondierenden, zusammenwirkenden Längsführungen und Antriebseinrichtungen zur steuerbaren Längsbewegung der Handhabungseinrichtungen parallel zur Förderrichtung der Horizontalfördereinrichtung ausgestattet sein, was eine schnelle und reibungsarme Beweglichkeit der Handhabungseinrichtungen entlang der Horizontalfördereinrichtung gewährleistet. Zudem sind die Verbindungen und Längsführungen in einer Weise auszugestalten, die eine schnelle und unkomplizierte An- und Abkoppelung der jeweils in der Vorrichtung zu installierenden bzw. von dieser zu entfernenden Handhabungseinrichtungen erlaubt. Die erwähnten Antriebseinrichtungen können jeweils einen mechanischen und/oder elektromagnetischen Antrieb umfassen. So kann bspw. im Rahmen der Handhabungseinrichtung ein elektrischer Antriebsmotor installiert sein, der ein Ritzel antreibt, das mit einer ortsfest im Bereich der Auflageschienen am Rand der Horizontalfördereinrichtung befindlichen Zahnstange kämmt und dadurch für den geschwindigkeitsvariablen Antrieb des Rahmens der Handhabungseinrichtung in beide Richtungen entlang der Horizontalfördereinrichtung sorgen kann. Zur präzisen Führung des Rahmens kann darüber hinaus eine Mehrfach-Rollenführung mit winkelig zueinander angestellten Rollensätzen, die sich mit einer Führungsschiene im Eingriff befinden, vorgesehen sein. Wahlweise kann die Führung auch mittels eines magnetisch wirkenden Linearantriebs erfolgen, ggf. sogar mit Luftlagerungen, berührungsfreien magnetischen Lagerungen o. dgl. mehr. Auch Kombinationen dieser erwähnten Antriebe und Lagerungen sind möglich, bspw. eine Rollenlagerung zur reibungsarmen Führung und Definition der Auflage und ein magnetischer Linearantrieb zur Steuerung der Bewegungen und Geschwindigkeiten der Rahmen der Handhabungseinrichtungen.

Das wenigstens eine Manipulationselement jeder Handhabungseinrichtung kann wenigstens einen Greifer und/oder wenigstens einen Schieber o. dgl. bewegliches Element umfassen, dessen/deren Bewegungsbereich sich innerhalb des Förderbereichs und oberhalb der Förderebene der Horizontalfördereinrichtung befindet. Ein solcher Greifer kann einen vertikal beweglichen und auf die zu greifenden Artikel, Stückgüter, Gruppierungen und/oder Gebinde zustellbaren Greiferkopf aufweisen, der in einer Weise drehbar und in horizontaler Richtung innerhalb des Bewegungsbereichs des ihm zugeordneten Rahmens der Handhabungseinrichtung verschiebbar ist, dass die damit gegriffenen Artikel, Stückgüter, Gruppierungen und/oder Gebinde innerhalb der jeweils eingenommenen Position der Handhabungseinrichtung auf der Auflage- und/oder Förderebene der Horizontalfördereinrichtung verschoben und/oder gedreht werden können. Die Aufhängung eines solchen Greiferelements ähnelt der Aufhängung herkömmlicher Portalroboteranordnungen oder entspricht dieser.

Die Handhabungseinrichtungen können wahlweise Schieberelemente in unterschiedlichen Ausführungsvarianten aufweisen, bspw. als einseitig oder beidseitig der Ränder der Auflage- und/oder Förderebene der Horizontalfördereinrichtung angeordnete Schieber, die senkrecht zur Förderrichtung zustellbar sind, um die Artikel-, Stückgut- oder Gebindegruppierungen seitlich zusammenzuschieben und Lücken zu schließen. Die Schieberelemente können jedoch auch als absenkbare und anhebbare Querbalken, Schubbalken, Anlagebalken o. dgl. ausgebildet sein, deren Anlageflächen quer zur Förderrichtung in den Förderweg der Horizontalfördereinrichtung eingeschoben oder daraus nach oben herausgezogen werden können. Wahlweise können die Schieberelemente jeweils mehrteilig ausgebildet sein und bspw. durch mehrere, vorzugsweise unabhängig voneinander steuerbare Schiebersegmente gebildet sein, um die Variabilität und die Varianten der Eingriffsmöglichkeiten zu erhöhen.

Wenn im Zusammenhang der vorliegenden Erfindung von einem Förderabschnitt gesprochen wird, in dem mehrere Handhabungseinrichtungen mit variablen Bewegungsbereichen angeordnet sind, so ist damit nicht zwingend ein räumlich abgegrenzter Abschnitt exakt definierter Länge gemeint. Vielmehr ermöglicht es der modulare Aufbau der erfindungsgemäßen Vorrichtung, Förderabschnitte nahezu beliebiger Länge mit geeigneten Führungselementen und Bewegungssteuerungen auszustatten, um entlang des gegebenen Förderabschnittes eine Anzahl von zwei, drei oder mehr unabhängig - unter Vermeidung von Kollisionen - voneinander bewegbaren Handhabungseinrichtungen unterzubringen, die mit Hilfe einer geeigneten Bewegungssteuerung für die Sortierung und Gruppierung einer großen Anzahl von horizontal beförderten Artikeln sorgen können.

Zur Erreichung des oben genannten Ziels schlägt die Erfindung weiterhin ein Verfahren gemäß dem Anspruch 6 zur Steuerung einer Anordnung mit wenigstens zwei Handhabungseinrichtungen vor, die einem Förderabschnitt einer Vorrichtung zur Förderung, Handhabung, Gruppierung, Palettierung und/oder Verpackung von Artikeln, Stückgütern, Gruppierungen und/oder Gebinden zugeordnet sind. Die zwei oder mehr Handhabungseinrichtungen weisen jeweils einen entlang einer Förderrichtung einer Horizontalfördereinrichtung beweglichen Rahmen mit wenigstens einem daran beweglich angeordneten oder aufgehängten Manipulationselement zur Handhabung, Verschiebung oder sonstigen Wechselwirkung von/mit auf der Horizontalfördereinrichtung transportierten Artikeln, Stückgütern, Gruppierungen und/oder Gebinden auf.

Die zwei oder mehr Handhabungseinrichtungen bewegen sich jeweils innerhalb von sich zumindest teilweise gegenseitig überdeckenden Bewegungsräumen. So können sich insbesondere zwei benachbarte Handhabungseinrichtungen innerhalb von Bewegungsräumen, die sich jeweils parallel zur Förderrichtung der Horizontalfördereinrichtung erstrecken und die sich zumindest teilweise überdecken, um eine erhöhte Flexibilität der Handhabungseinrichtungen und damit u.a. eine höhere Verarbeitungsgeschwindigkeit zu ermöglichen.

Das wenigstens eine Manipulationselement umfasst wenigstens einen Greifer und/oder wenigstens einen Schieber o. dgl. bewegliches Element, dessen/deren Bewegungsbereich sich innerhalb des Förderbereichs und oberhalb der Förderebene der Horizontalfördereinrichtung befindet. Mit dem Greifer können einzelne der transportierten Artikel, Stückgüter, Gruppierungen und/oder Gebinde oder auch gleichzeitig Paare oder Gruppen dieser Artikel, Stückgüter, Gruppierungen und/oder Gebinde gegriffen, gedreht und/oder verschoben werden, während sie auf der Förderebene der Horizontalfördereinrichtung bewegt werden, um auf diese Weise eine gewünschte Lagenbildung oder Palettenanordnung o. dgl. Formatierung der Artikel, Stückgüter, Gruppierungen und/oder Gebinde zu erreichen. Sofern die Handhabungseinrichtung mit Schiebern ausgestattet ist, können diese bspw. seitlich angeordnet sein und von beiden Seiten der Längsränder der Horizontalfördereinrichtung jeweils senkrecht zur Förderrichtung zugestellt werden, um Artikel, Stückgüter, Gruppierungen und/oder Gebinde oder Lagen daraus zusammenzuschieben und Lücken zu verringern. Die Schieber können jedoch auch quer zur Förderrichtung angeordnet sein und als Schubelemente, Staubalken o. dgl. fungieren.

Das erfindungsgemäße Verfahren sieht vor, dass die Bewegungssteuerungen der zwei oder mehr Handhabungseinrichtungen jeweils programmgesteuert in einer Weise aufeinander abgestimmt sind, dass sich die Manipulations-, Dreh- und/oder Verschiebewege für die zu handhabenden Artikel, Stückgüter, Gruppierungen und/oder Gebinde zumindest bei jeweils benachbarten Handhabungseinrichtungen flexibel und/oder mit variabel definierbaren Übergabestellen aneinander anschließen. Wenn in diesem Zusammenhang der Begriff der Übergabestelle verwendet wird, so sei darauf hingewiesen, dass die Artikel nicht an jeder Stelle des Förderabschnittes von einer Handhabungseinrichtung an eine weitere Handhabungseinrichtung übergeben werden. So kann es durchaus sein, dass einzelne Handhabungseinrichtungen in bestimmten Konstellationen nicht eingreifen und nicht in Aktion treten, weil bspw. keine weitere Drehung oder Verschiebung bestimmter Artikel erforderlich sind. In solchen Fällen kann der letzte Eingriff vor der Lagenbildung bspw. durch eine weiter stromabwärts angeordnete Handhabungseinrichtung erfolgen, die lediglich für eine Verschiebung um einen geringen Weg oder bspw. für eine Zentrierung zu sorgen hat. Somit ist der Begriff der Übergabestelle räumlich dahingehend zu verstehen, dass an dieser Stelle der Einflussbereich und die Reichweite der betroffenen Handhabungseinrichtung enden. Wie zuvor erwähnt, können diese Übergabestellen gemäß der vorliegenden Erfindung durchaus variabel gestaltet sein und/oder sich programmgesteuert auch permanent ändern.

Dies umfasst die Möglichkeit, jede der zwei oder mehr vorhandenen Handhabungseinrichtungen innerhalb von variabel definierbaren und/oder dynamisch veränderlichen Grenzen parallel zur Förderrichtung der Horizontalfördereinrichtung hin und her zu bewegen, und zwar in einer Weise, dass sich die Bewegungsbereiche benachbarter Handhabungseinrichtungen über kurze Abschnitte oder auch über längere Abschnitte überdecken können. Wahlweise können sich auch die Bewegungsbereiche von drei oder mehr Handhabungseinrichtungen gegenseitig überdecken. Somit ist einerseits die Flexibilität der Bewegungssteuerung der einzelnen Handhabungseinrichtungen erhöht, was eine Beschleunigung der Sortier- und/oder Lagenbildungsprozesse ermöglicht, denn die Bewegungssteuerungen benachbarter und/oder aufeinander folgender Handhabungseinrichtungen lassen sich wesentlich flexibler aufeinander abstimmen als dies bei herkömmlichen Portalrobotern mit ihren festen räumlichen Anordnungen der Fall ist. So kann bspw. bei einem relativ weiten Verschiebeweg eines Artikels, der mit einer ersten Handhabungseinrichtung zurückzulegen ist, die nachfolgende Handhabungseinrichtung in Förderrichtung ausweichen, um nicht mit der noch mit der Verschiebung des Artikels betrauten ersten Handhabungseinrichtung zu kollidieren. In gleicher Weise kann eine nur einen kurzen Verschiebe- oder Rotationsweg durchzuführende Handhabungseinrichtung nach Zurücklegen eines sehr kurzen Translationswegs entlang der Fördereinrichtung wieder zurückbewegt werden, um einer benachbarten Handhabungseinrichtung Platz zu machen, die einen umfangreicheren Manipulationsvorgang bei der Umsortierung, Drehung, Translation etc. von einem Artikel oder von mehreren Artikeln durchführen muss.

Trotz der frei definierbaren Bewegungsbereiche der mindestens zwei Handhabungseinrichtungen ist gewährleistet, dass diese nicht miteinander kollidieren. Eine geeignete Einrichtung zur Kollisionsüberwachung in der Steuerung sorgt dafür, dass sämtliche Handhabungseinrichtungen, welche der Horizontalfördereinrichtung zugeordnet sind, nicht miteinander kollidieren. Die Kollisionsüberwachung kommt sinnvollerweise über den gesamten Förderweg der Horizontalfördereinrichtung zum Einsatz.

Das mit der vorliegenden Erfindung zur Verfügung gestellte Verfahren ermöglicht es jedoch auch, die flexibel handhabbaren und über variabel definierbare Verschiebe-und/oder Transportwege bewegbaren Handhabungseinrichtungen bei Bedarf schnell und unkompliziert von der Basisvorrichtung, der oben definierten Vorrichtung zur Förderung, Handhabung, Gruppierung, Palettierung und/oder Verpackung von Artikeln, Stückgütern, Gruppierungen und/oder Gebinden zu trennen, abzuheben und zu entfernen, bspw. über einen Portalkran oder eine andere geeignete Hebeeinrichtung. So kann es bspw. sinnvoll sein, bei einer Produktumstellung, bei der weniger Handhabungseinrichtungen als bisher benötigt werden, eine oder mehrere der Handhabungseinrichtungen zu entfernen und von ihren Auflagen zu trennen. Eine solche Trennung der Handhabungseinrichtungen von ihrer Auflage bzw. Maschinenumgebung kann jedoch gleichermaßen bei einem auftretenden Defekt oder einer mechanischen und/oder steuerungstechnischen Störung einer der Handhabungseinrichtungen der Fall sein. Durch einfaches Abheben und Austauschen der Handhabungseinrichtungen können Defekte und Störungen schnell behoben werden und verursachen dadurch keinem längeren Maschinenausfall.

Die einfache Austauschbarkeit und Entfernbarkeit einzelner defekter Handhabungseinrichtungen kann zudem vorteilhaft dazu genutzt werden, die Vorrichtung mit reduzierter Verarbeitungskapazität weiter zu betreiben, wenn bspw. keine Ersatzeinrichtungen für die defekten Handhabungseinrichtungen zur Verfügung stehen. In diesem Fall können die Bewegungsbereiche der verbleibenden Handhabungseinrichtungen - ggf. sogar der einzigen verbleibenden Handhabungseinrichtung - modifiziert, angepasst und je nach Bedarf deutlich erweitert werden, wobei gleichzeitig die Fördergeschwindigkeit der Horizontalfördereinrichtung in angemessener Weise zu reduzieren ist, damit die Abstimmung mit der Fördergeschwindigkeit der Horizontalfördereinrichtung nicht beeinträchtigt wird. Dennoch kann die Grundfunktionalität der Vorrichtung ohne weitere Einschränkungen aufrecht erhalten werden, da die Bewegungsmöglichkeiten der verbleibenden Manipulatoren und der flexibel anpassbare Verschiebeweg der verbleibenden Handhabungseinrichtungen die uneingeschränkte Aufrechterhaltung aller zuvor vorhandenen Funktionen erlaubt, wenn auch mit reduzierter Bearbeitungsgeschwindigkeit.

Ein besonderer Vorteil des erfindungsgemäßen Verfahrens zur variablen Steuerung von wenigstens zwei Handhabungseinrichtungen liegt darin, dass sich die Arbeitsbereiche der Handhabungseinrichtungen entlang der Horizontalfördereinrichtung in weiten Grenzen an die jeweiligen Erfordernisse anpassen lassen. So können je nach zu verarbeitenden Artikeln, Stückgütern, Gruppierungen und/oder Gebinden sowie je nach gewünschter Lagengröße von daraus zu bildenden Palettenlagen, Großgebindeanordnungen etc. auch entsprechend unterschiedliche Arbeitsbereiche der einzelnen Handhabungseinrichtungen eingestellt werden. Die Paletten- oder Gebindegrößen und -ausdehnungen sind zumindest in Förderrichtung der Horizontalfördereinrichtung nicht mehr von den Bewegungsbereichen einzelner Portalroboter abhängig, sondern können aufgrund der flexibel verschiebbaren Bewegungsbereiche der Handhabungseinrichtungen gleichermaßen flexibel gehandhabt werden.

Ein weiterer besonders vorteilhafter Aspekt des erfindungsgemäßen Verfahrens ermöglicht eine permanente und/oder in vorgebbaren Zyklen veränderliche Bewegungslänge der einzelnen Handhabungseinrichtungen, die sich somit jeweils innerhalb von Bewegungsbereichen variabler Länge und/oder mit Überdeckungsbereichen variabler Länge bewegen können. So kann bspw. ein Steuerprogramm vorsehen, dass die einzelnen Handhabungseinrichtungen je nach erforderlichem Verschiebe- und/oder Rotationsweg der jeweils zu bewegenden Artikel einen längeren oder kürzeren Weg zurücklegen können, was einen variablen Anschluss und eine flexibel veränderbare Übergabestelle zu einer nachfolgenden Handhabungseinrichtung erlaubt. Bei einer solchen Steuerung der Handhabungseinrichtungen ist zusätzlich darauf zu achten, dass die Bewegungs- und Überdeckungsbereiche der Handhabungseinrichtungen unter permanenter Vermeidung von Kollisionen mit benachbarten Handhabungseinrichtungen gesteuert und/oder variiert werden. Diese flexible Anpassung der Bewegungs- und Überdeckungsbereiche erlaubt eine höhere Fördergeschwindigkeit der Horizontalfördereinrichtung, da die Artikel bei unveränderten Bewegungs- und/oder Rotationsgeschwindigkeiten der einzelnen Manipulatoren schneller in die gewünschten Positionen zur Erzeugung der stapelbaren Artikellagen gebracht werden können.

Nachfolgend finden sich nochmals einige Aspekte der vorliegenden Erfindung in knapper Form zusammengefasst. So liefert die vorliegende Erfindung ein modulares Handhabungssystem mit mindestens zwei vom Grundaufbau identischen oder auch unterschiedlichen Portalen, welche durch unterschiedliche Ausbauvarianten unterschiedliche Funktionen und somit Aufgaben erfüllen können. Die mindestens zwei Portale sind unabhängig voneinander entlang einer Horizontalfördereinrichtung bewegbar, insbesondere verfahrbar. So können die Portale über zumindest einem Förderband wie bspw. einer Mattenkette o. dgl. beliebiger Länge angeordnet sein. Die Förderbänder können mehrere nebeneinander oder aber auch einzelne hintereinander angeordnete Förderspuren umfassen. Die Portale können mechanisch leicht ein- und auskoppelbar gestaltet sein. D.h., sie können von ihrer Maschinenumgebung als Ganzes getrennt und abgenommen werden. Somit können auch jederzeit zusätzliche Portale hinzugefügt werden. Bei einer auftretenden Störung können die Portale komplett ausgetauscht werden. Hierzu ist kein aufwändiges Ausbauen und Zerlegen von Einzelkomponenten notwendig.

Bei der Verwendung von wenigstens zwei Portalen, welche unabhängig voneinander gesteuert und parallel zur Förderrichtung der Förderbänder verfahren werden können, ist es zudem möglich, den einzelnen Arbeitsbereich eines oder mindestens zweier Portale in Bezug auf das Fördermittel zu verschieben. Die Portale sind also in Bezug auf die Fördergeschwindigkeit des darunter angeordneten Transporteurs gesteuert verfahrbar. An den einzelnen Portalen ist jeweils eine Manipulatoraufnahme angeordnet, welche entweder direkt an der Brücke oder an den Seitenträgern des Portals angeordnet sein kann. Damit können die Manipulatoren der Portale unterschiedliche Aufgaben erfüllen wie bspw. Überschieben, Zentrieren, Greifen etc. von Artikeln, Behältern, Gebinden, Stückgütern etc.

Es besteht auch die Möglichkeit, dass ein Portal über mehrere Manipulatoraufnahmen verfügt. So wäre bspw. eine Kombination aus Überschieben und Zentrieren im Einflussbereich eines Portals denkbar. Die Portale können bspw. über Zahnriemen, Zahnstangen, Linearantriebe oder Schienensysteme angetrieben werden. Wichtig für die Erfindung ist lediglich, dass die jeweilige Steuer- und Verfahrmöglichkeit des jeweiligen Portals unabhängig ist von der Beweglichkeit des einen oder mehreren anderen Portals bzw. Portalen.

Die Bauhöhe eines Gruppiermoduls kann gegenüber bekannten Portalroboteranordnungen relativ niedrig ausfallen. Die Systemkosten können gegenüber bekannten Vorrichtungen reduziert werden, da sich die Grundbaugruppen der einzelnen Portale nicht voneinander unterscheiden; die Portale können jeweils identische Grundkonstruktionen aufweisen. Die schnelle Wechselmöglichkeit von defekten Gruppiermodulen reduziert die Kosten, da die Ausfallzeiten bei der Produktion erheblich verkürzt werden können. Da zudem die Arbeitsbereiche flexibel auf die zu verarbeitenden Produkte angepasst werden können (z.B. Halblagenpalletierung, Großlagenpalettierung, Einzelgebinde), ergibt sich ein reduzierter Platzbedarf innerhalb größerer Verpackungsstraßen.

Wenn im vorliegenden Zusammenhang von Portalen, Gruppiermodulen, Handhabungseinrichtungen etc. die Rede ist, so ist damit normalerweise jeweils dieselbe Baugruppe bezeichnet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung einer erfindungsgemäßen Anordnung mit wenigstens zwei beweglichen Handhabungseinrichtungen.
Fig. 2 zeigt in zwei perspektivischen Ansichten einen Fördertisch einer erfindungsgemäßen Vorrichtung gemäß Fig. 1.
Fig. 3 zeigt in drei perspektivischen Ansichten unterschiedliche Konfigurationen miteinander kommunizierender Handhabungseinrichtungen in einem Förderabschnitt einer erfindungsgemäßen Vorrichtung.
Fig. 4 zeigt in einer perspektivischen Darstellung verschiedene Varianten von Antriebssystemen zur Längsführung und -bewegung der Handhabungseinrichtungen.
Fig. 5 zeigt in drei schematischen Darstellungen verschiedene Konfigurationen von Bewegungs- und Überdeckungsbereichen der längsverschiebbar geführten Handhabungseinrichtungen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

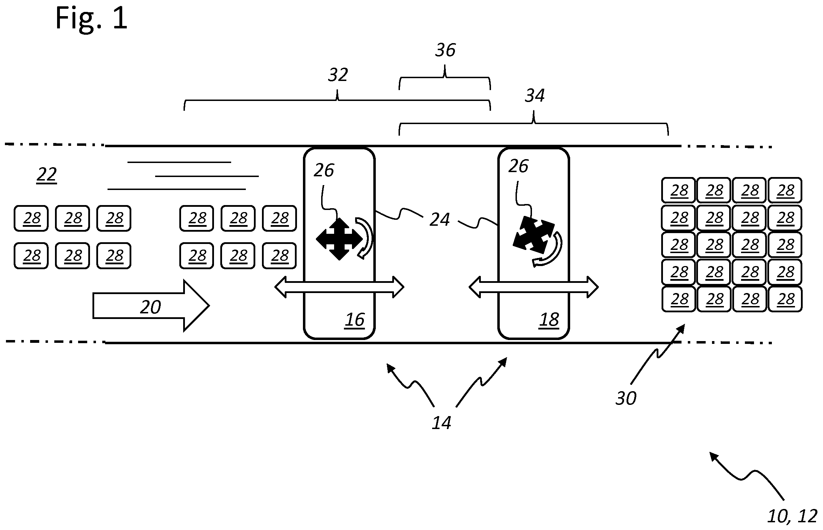

Die schematische Darstellung der Fig. 1 verdeutlicht den Aufbau, die Wirkungsweise und die Besonderheiten einer erfindungsgemäßen Vorrichtung 10 zur Förderung, Handhabung, Gruppierung, Palettierung und/oder Verpackung von Artikeln, Stückgütern, Gruppierungen und/oder Gebinden, wobei die gesamte Vorrichtung 10, die insbesondere Teil einer Verpackungs- oder Palettieranlage sein kann, hier lediglich angedeutet ist. Die Vorrichtung 10 umfasst einen Förderabschnitt 12 mit einer Anordnung 14 wenigstens zweier Handhabungseinrichtungen 16 und 18, die jeweils einen entlang einer Förderrichtung 20 einer Horizontalfördereinrichtung 22 beweglichen Rahmen 24 mit wenigstens einem daran beweglich angeordneten oder aufgehängten Manipulator oder Manipulationselement 26 zur Handhabung, Verschiebung oder sonstigen Wechselwirkung von/mit auf der Horizontalfördereinrichtung 22 transportierten Artikeln 28, Stückgütern, Gruppierungen und/oder Gebinden aufweist. Die auf der Horizontalfördereinrichtung 22 in Förderrichtung 20 bewegten Artikel 28 sollen mittels der Handhabungseinrichtungen 16 und 18 in eine gewünschte Formation gebracht werden, bspw. in eine Lagenformation 30, die sich für eine Palettierung mit übereinander gestapelten Lagenformationen 30 eignet.

Die Zuförderung der Artikel 28 kann bspw. auch über mindestens ein der Horizontalfördereinrichtung 22 parallel laufendes und insbesondere stirnseitig angeschlossenes Zulaufband (nicht dargestellt) oder auch mehrere solcher Zulaufbänder erfolgen, die vorzugsweise parallel laufen und jeweils in einreihiger oder mehrreihiger Transportanordnung die Artikel 28 zu den Handhabungs- und Sortiereinrichtungen 16, 18 befördern.

Wie es die den beiden Rahmen 24 der beiden Handhabungseinrichtungen 16 und 18 jeweils zugeordneten Doppelpfeile andeuten, können sich beide Rahmen 24 jeweils in beide Richtungen parallel zu Förderrichtung 20 bewegen und weisen jeweils ihnen zugewiesene Bewegungsräume 32 und 34 auf, die nicht unmittelbar aneinander grenzen, sondern in einer Weise ineinander übergehen, so dass sich die Bewegungsräume 32 und 34 der zwei oder mehr Handhabungseinrichtungen 16 und 18 zumindest abschnittsweise überdecken. Dieser Überdeckungsbereich 36 kann unterschiedlich lang ausfallen und kann sich auch je nach Bedarf dynamisch verändern. Im gezeigten Ausführungsbeispiel der Fig. 1 ist der ersten Handhabungseinrichtung 16 der erste Bewegungsraum 32 zugeordnet, während der zweiten Handhabungseinrichtung 18 der zweite Bewegungsraum 34 zugeordnet ist. Der Abschnitt, in dem sich die beiden Bewegungsräume 32 und 34 entlang der Förderrichtung 20 überdecken können, ist mit der Bezugsziffer 36 gekennzeichnet.

Die Fig. 1 lässt weiterhin erkennen, dass die den jeweiligen Handhabungseinrichtungen 16 und 18 zugeordneten Manipulatoren 26 oder Manipulationseinrichtungen jeweils unterschiedliche Bewegungsrichtungen ermöglichen, was jeweils durch gekreuzte Doppelpfeile und Drehrichtungspfeile angedeutet ist. Wie nachfolgend näher erläutert wird, können die Manipulatoren 26 ganz unterschiedlich ausgestaltet sein, wobei verschiedene Handhabungseinrichtungen 16 bzw. 18 jeweils unterschiedlich ausgestaltete Manipulatoren 26 aufweisen können.

Anders als in Fig. 1 dargestellt, kann die Vorrichtung 10 entlang der Förderrichtung 20 der Horizontalfördereinrichtung 22 mehr als zwei Handhabungseinrichtungen 16 und 18 mit sich jeweils teilweise überdeckenden Bewegungsbereichen 32 und 34 aufweisen. Je nach Bedarf können auch drei, vier oder mehr solcher Handhabungseinrichtungen vorgesehen sein, die vorzugsweise jeweils gleichartige Rahmen 24 und gleichartige oder jeweils unterschiedliche Manipulatoren 26 aufweisen können, um bei möglichst hoher Fördergeschwindigkeit der Horizontalfördereinrichtung 22 einen möglichst hohen Durchsatz an umzusortierenden Artikeln 28 zu erreichen, die als stapelbare Artikellagen 30 weiterbefördert werden, bspw. mittels einer Beladestation (Palettierer) zu einem Stapelplatz, einem Palettenplatz o. dgl.

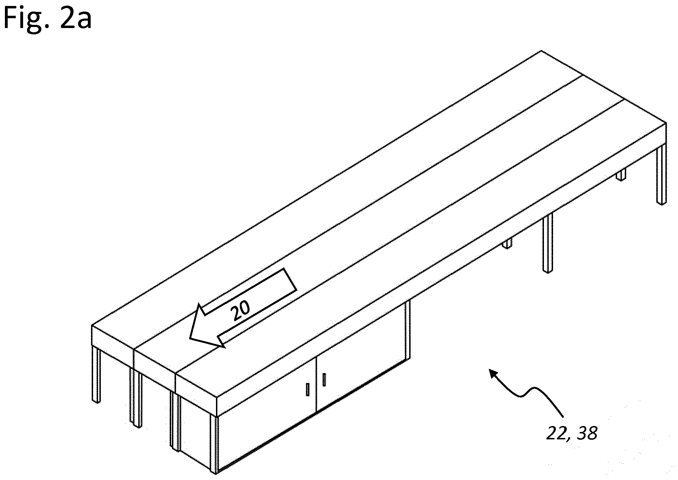

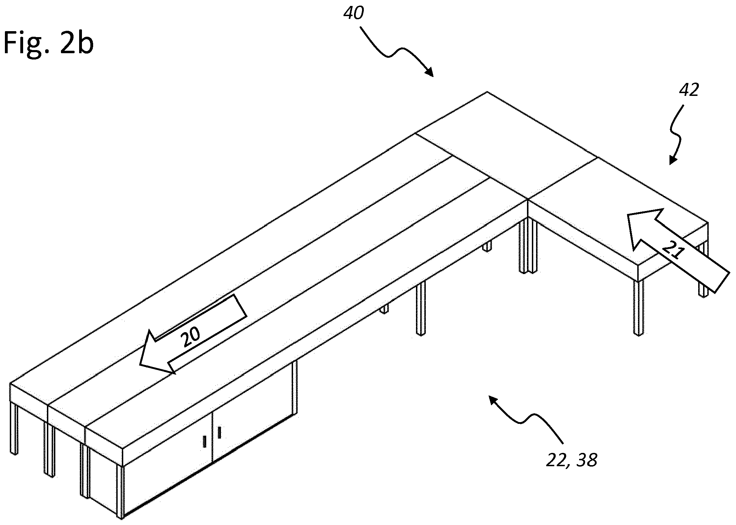

Die schematischen Darstellungen der Fig. 2 zeigen einen möglichen Aufbau der Vorrichtung 10, die einen Fördertisch 38 aufweist, der einen Teil der Horizontalfördereinrichtung 22 bildet (Fig. 2a). Der Fördertisch 38 kann eine rechtwinkelige Umlenkung 40 mit einer sich an die Horizontalfördereinrichtung 22 bzw. den Fördertisch 38 anschließenden Zuförderung bzw. Zufördereinrichtung 42 aufweisen (Fig. 2b), welche für die Zuleitung der zu gruppierenden bzw. in eine gewünschte Lagenanordnung 30 zu bringenden Artikel 28 sorgen kann (vgl. Zuförderrichtung 21 in Fig. 2b).

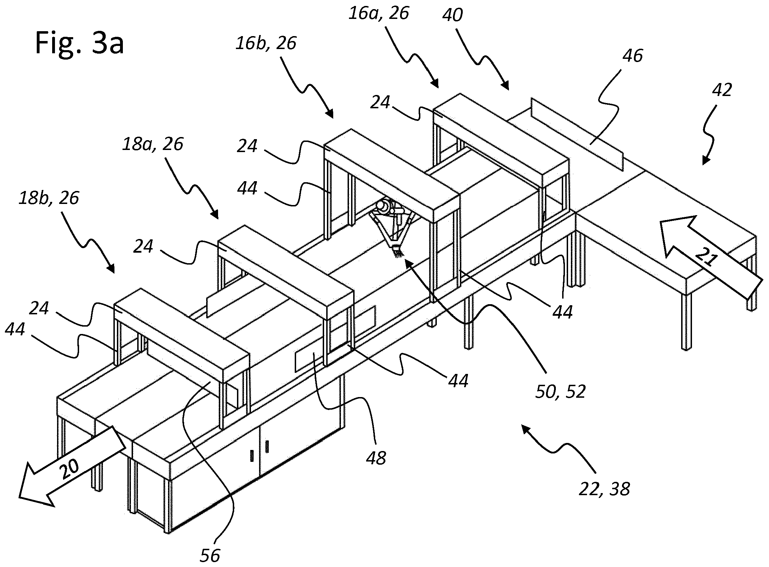

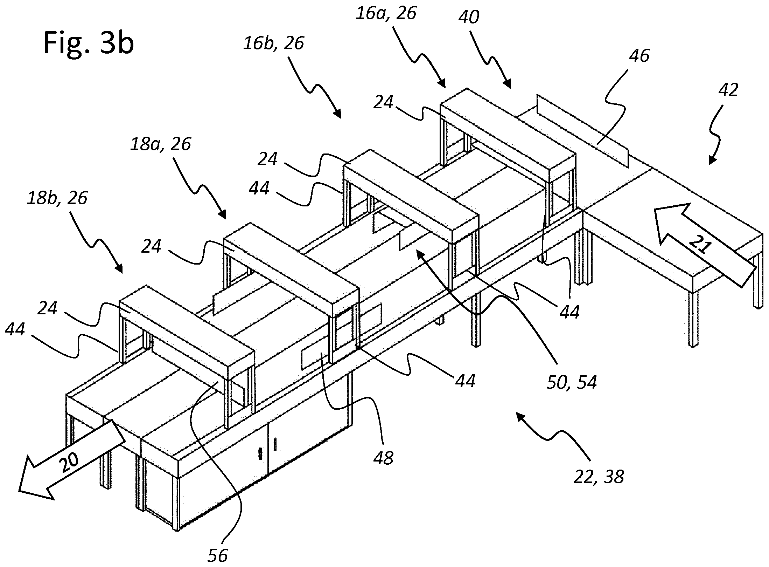

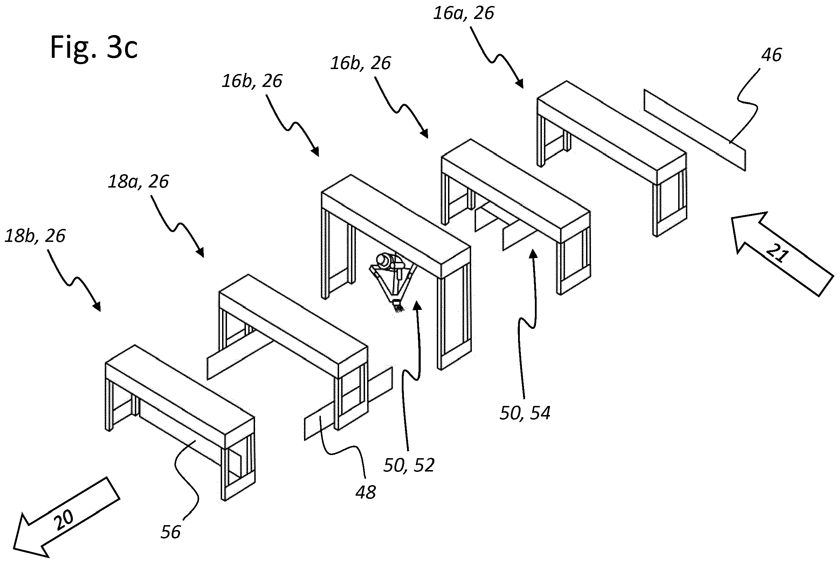

Die perspektivischen Darstellungen der Fig. 3 zeigen verschiedene sinnvolle Varianten von Handhabungseinrichtungen 16 bzw. 18, die mit unterschiedlichen Manipulatoren 26 ausgestattet sein können. So zeigt die Fig. 3a eine Ausführungsvariante mit insgesamt vier Handhabungseinrichtungen 16 und 18, die jeweils durch einen brückenartigen Rahmen 24 mit seitlichen Stützabschnitten 44 gebildet sind. Die seitlichen Stützabschnitte 44 der Rahmen 24 stützen sich jeweils an beiden Längsseiten des Fördertischs 38 bzw. der Horizontalfördereinrichtung 22 ab und sind dort längsverschiebbar bzw. längsbewegbar oder verfahrbar parallel zur Förderrichtung 20 geführt.

Bei der in Fig. 3a gezeigten Variante der Vorrichtung 10 schließt sich an den Zufördertisch bzw. die Zufördereinrichtung 42 mit der Förderrichtung 21 der hier nicht gezeigten Artikel 28 ein Querschieber 46 an, der die Artikel 28 gruppenweise und zyklisch in die Förderrichtung 20 des Fördertischs 38 bzw. der Horizontalfördereinrichtung 22 überführt. Dieser Querschieber 46 kann insbesondere einer in Förderrichtung 20 zuerst angeordneten Handhabungseinrichtung 16a zugeordnet sein. Diese erste Handhabungseinrichtung 16a weise somit einen Manipulator 26 in Gestalt des Querschiebers 46 auf, der vertikal abgesenkt werden kann, um Artikel 28 (nicht dargestellt) kurzzeitig aufzustauen, um die Artikel bspw. in die Beladestation überzuschieben und/oder in Förderrichtung 20 zu schieben. Dieser Querschieber 46 weist eine Längserstreckungsrichtung quer zur Förderrichtung 20 auf.

Die der ersten Handhabungseinrichtung 16a nachgeordnete weitere Handhabungseinrichtung 16b weist einen Manipulator 26 in Gestalt eines Greiferkopfes 50 auf, der gemäß der Darstellung der Fig. 1 gedreht, in alle Richtungen verschoben, abgesenkt und angehoben werden kann. Der Greiferkopf 50 kann wahlweise die in Fig. 3a gezeigte Gestaltung mit mehreren Greifstäben oder -fingern 52 oder auch die in Fig. 3b gezeigte Ausgestaltung mit einem Schieberpaar 54 aufweisen, das drehbar, verschiebbar, heb- und senkbar sein kann.

Die in Fig. 3a gezeigte Handhabungseinrichtung 16b kann einen deutlich höheren Rahmen 24 mit längeren seitlichen Stützabschnitten 44 aufweisen als die in Fig. 3b gezeigte Ausführungsvariante, was dem Greiferkopf 50 den notwendigen vertikalen Bewegungsraum bieten kann, der deutlich größer ist als der vertikale Bewegungsraum, den das Schieberpaar 54 gemäß Fig. 3b benötigt.

Eine der weiteren Handhabungseinrichtung 16b nachgeordnete Handhabungseinrichtung 18a weist einen Manipulator 26 in Gestalt eines Paars von seitlich zustellbaren Schieberelementen 48 auf, die quer zur Förderrichtung 20 aufeinander zugestellt oder voneinander entfernt werden können, wodurch Lücken zwischen nebeneinander beförderten Artikeln 28 reduziert werden können.

Die in Förderrichtung 20 zuletzt angeordnete Handhabungseinrichtung 18b kann wiederum einen Querschieber 56 o. dgl. als Manipulator 26 aufweisen, der die Artikel 28 bspw. zur endgültigen Formatierung zur Herstellung der Artikellage 30 (vgl. Fig. 1) geringfügig aufstauen kann.

Die schematische Darstellung der Fig. 3c verdeutlicht nochmals die in Fig. 3a und Fig. 3b in ihrer Anordnung zueinander gezeigten unterschiedlichen Handhabungseinrichtungen 16a, 16b, 18a und 18b, die mit unterschiedlichen Manipulatoren 26 bzw. 46, 48, 50, 52, 54 und 56 ausgestattet sein können.

Alle vier (bzw. fünf in Fig. 3c) gezeigten Handhabungseinrichtungen 16a, 16b, 18a und 18b weisen jeweils eine Längsverschiebbarkeit parallel zur Förderrichtung 20, d.h. entlang der beiden Längsseiten der Horizontalfördereinrichtung 22 bzw. des Fördertischs 38 auf. Um diese Beweglichkeit und Steuerbarkeit zu ermöglichen, sind an beiden Seiten des Fördertischs 38 bzw. der Horizontalfördereinrichtung 22 jeweils Schienenelemente 58 vorgesehen, die in einer Weise mit den Unterseiten der beiden Stützabschnitte 44 jedes Rahmens 24 zusammenwirken, dass sowohl eine zuverlässige Führung als auch ein motorischer Antrieb und damit eine Bewegungssteuerung in gewünschter Richtung und in gewünschter Geschwindigkeit ermöglicht ist.

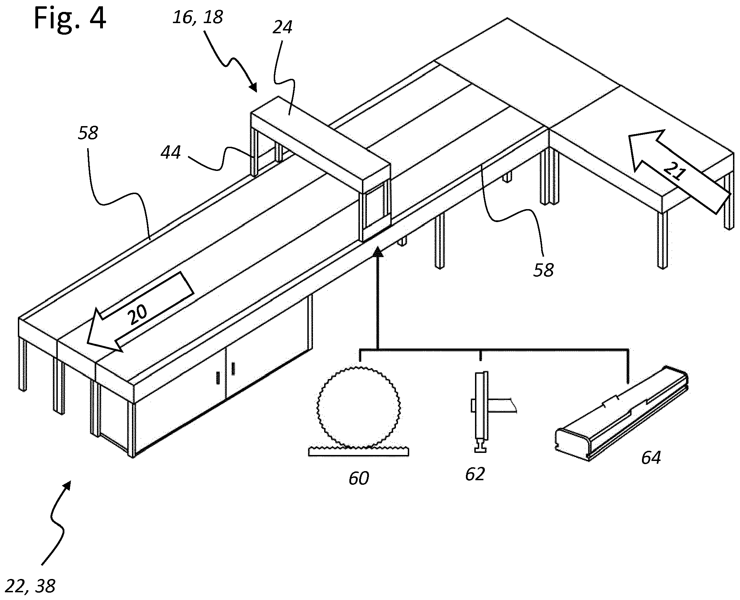

Gemäß Fig. 4 stehen für diese kombinierte Führungs- und Antriebsaufgabe unterschiedliche Varianten zur Verfügung, so bspw. ein Zahnradantrieb 60, ein Schienensystem 62 und/oder ein Linearantrieb 64, wobei diese Antriebs- und Führungsvarianten 60, 62 und 64 ggf. auch abgewandelt und miteinander kombiniert sein können. Darüber hinaus sind weitere, hier nicht gezeigte Ausführungsvarianten für diese Führungs- und Antriebsaufgabe denkbar. Es sei an dieser Stelle nochmals ausdrücklich darauf hingewiesen, dass sich für den Antrieb der Handhabungseinrichtungen 16 und 18 grundsätzlich die unterschiedlichsten Antriebsvarianten eignen, seien dies mechanische Zahnstangenantriebe, elektromagnetische Linearantriebe o. dgl. Auch für die Lagerung und Führung der Stützabschnitte 44 der Handhabungseinrichtungen 16, 18 eignen sich die unterschiedlichsten Varianten, so bspw. Rollenlagerungen und/oder ein Schienensystem 62, magnetische Lagerungen oder Luftlager, die ggf. berührungslos arbeiten können, oder auch luftdruckunterstützte Gleitlager oder eine nahezu beliebige Kombination der erwähnten Varianten.

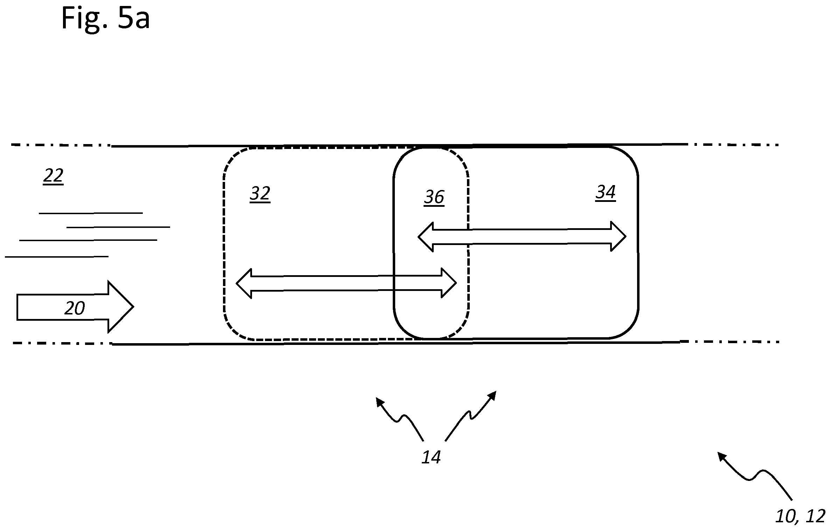

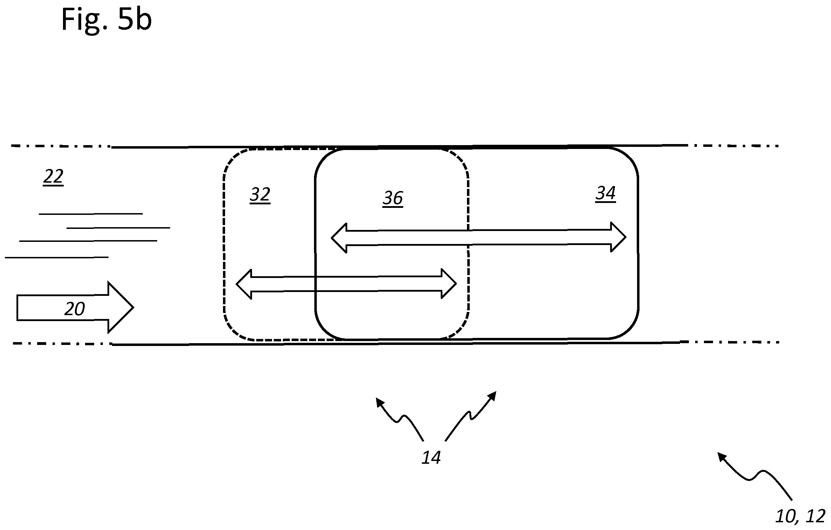

Wie es die Fig. 5a andeutungsweise erkennen lässt, überdecken sich die Bewegungsräume 32 und 34 der zwei oder mehr Handhabungseinrichtungen 16 und 18 zumindest teilweise in dem Überdeckungsbereich 36, wodurch die bei herkömmlichen Anordnungen gegebene eindeutige räumliche Zuordnung einer bestimmten Handhabungseinrichtung 16 oder 18 zu einem abgegrenzten Längen- und/oder Breitenabschnitt der Horizontalfördereinrichtung 22 zugunsten einer flexiblen Zuordnung aufgegeben ist. Jede der Handhabungseinrichtungen 16, 18 (vgl. Figuren 2 bis 4) kann somit in definierbaren und variablen Grenzen entlang der Horizontalfördereinrichtung 22 hin und her geschoben bzw. gesteuert verfahren werden, und zwar in einer Weise, dass sich die Bewegungsbereiche 32 und 34 jeweils benachbarter Handhabungseinrichtungen 16, 18 über kurze Abschnitte 36 (Fig. 5a) oder auch über längere Abschnitte 36 (vgl. Fig. 5b) überdecken können. Bei der Darstellung der Fig. 5b ist der zweite Bewegungsraum 34 der zweiten Handhabungseinrichtung 18 deutlich nach links, entgegen der Förderrichtung 20 vergrößert und erstreckt sich über einen deutlich größeren Überdeckungsbereich 36 in den Bewegungsraum 32 der ersten Handhabungseinrichtung 16 hinein. Wie es die beiden Doppelpfeile innerhalb der jeweiligen Bewegungsbereiche 32 und 34 jedoch andeuten, können diese Bewegungsbereiche 32 und 34 jederzeit nach Bedarf angepasst und dynamisch modifiziert werden. Wahlweise können sich auch die Bewegungsbereiche von drei oder mehr Handhabungseinrichtungen (gemäß Fig. 2, Fig. 3) gegenseitig überdecken.

Mittels der gezeigten dynamischen Anpassbarkeit der Bewegungsräume 32 und 34 kann bspw. bei einem relativ weiten Verschiebeweg eines Artikels 28, der mit der ersten Handhabungseinrichtung 16 zurückzulegen ist, die nachfolgende Handhabungseinrichtung 18 in Förderrichtung 20 ausweichen, um nicht mit der noch mit der Verschiebung des Artikels 28 beschäftigten ersten Handhabungseinrichtung 16 zu kollidieren. In gleicher Weise kann eine nur einen kurzen Verschiebe- oder Rotationsweg durchzuführende Handhabungseinrichtung 16 nach Zurücklegen eines sehr kurzen Translationswegs entlang der Fördereinrichtung 20 wieder zurückbewegt werden, um ihrer stromabwärts benachbarten Handhabungseinrichtung 18 Platz zu machen, die bspw. einen umfangreicheren Manipulationsvorgang bei der Umsortierung, Drehung, Translation etc. von einem Artikel 28 oder von mehreren Artikeln durchzuführen hat.

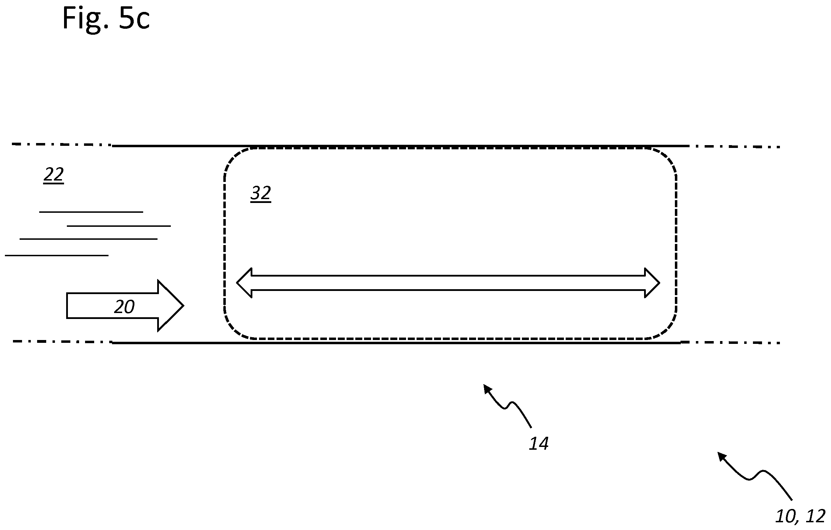

Die Handhabungseinrichtungen 16 und 18 lassen sich bei Bedarf schnell und mit geringem Aufwand vom Fördertisch 38 bzw. von der Vorrichtung 10 zur Förderung, Handhabung, Gruppierung, Palettierung und/oder Verpackung von Artikeln 28, Stückgütern, Gruppierungen und/oder Gebinden trennen und entfernen. Dies kann bspw. der Fall sein, wenn bei einer Produktumstellung nur wenige Handhabungseinrichtungen 16 oder 18 benötigt werden. Dies kann jedoch gleichermaßen bei einem auftretenden Defekt oder einer mechanischen und/oder steuerungstechnischen Störung einer der Handhabungseinrichtungen 16 oder 18 der Fall sein. Durch einfaches Abheben und Austauschen der Handhabungseinrichtungen 16 bzw. 18 können Defekte und Störungen schnell behoben werden und führen dadurch nicht zu einem längeren Maschinenausfall. Nach dem Entfernen einer oder mehrerer der Handhabungseinrichtungen 16, 18 kann die Vorrichtung 10 ggf. mit reduzierter Verarbeitungskapazität weiter betrieben werden, wenn bspw. keine Ersatzeinrichtung zur Verfügung steht. In diesem Fall können die Bewegungsbereiche 32 und 34 der verbleibenden Handhabungseinrichtungen 16, 18 - ggf. sogar der einzigen verbleibenden Handhabungseinrichtung (vgl. Fig. 5c) - modifiziert und angepasst werden, wobei gleichzeitig die Fördergeschwindigkeit der Horizontalfördereinrichtung 22 in angemessener Weise zu reduzieren bzw. anzupassen ist. Dennoch kann die Grundfunktionalität der Vorrichtung 10 ohne weitere Einschränkungen aufrecht erhalten werden, da die Bewegungsmöglichkeiten der verbleibenden Manipulatoren 26 und der flexibel anpassbare Verschiebeweg der verbleibenden Handhabungseinrichtungen 16, 18 die uneingeschränkte Aufrechterhaltung aller zuvor vorhandenen Funktionen erlaubt, wenn auch mit reduzierter Bearbeitungsgeschwindigkeit.

Wie es die Fig. 5c andeutet, kann die Vorrichtung 10 ggf. auch mit nur einer Handhabungseinrichtung weiterbetrieben werden, die in diesem Fall einen deutlich erweiterten Bewegungsraum 32 abdecken muss.

Ein besonders vorteilhafter Aspekt des erfindungsgemäßen Verfahrens ermöglicht eine permanente und/oder in vorgebbaren Zyklen veränderliche Bewegungslänge der einzelnen Handhabungseinrichtungen 16 und 18, die sich somit jeweils innerhalb von Bewegungsbereichen 32 und 34 variabler Länge und/oder mit Überdeckungsbereichen 36 variabler Länge bewegen können (Fig. 5a, Fig. 5b). So kann bspw. ein Steuerprogramm vorsehen, dass die einzelnen Handhabungseinrichtungen 16 und 18 je nach erforderlichem Verschiebe- und/oder Rotationsweg der jeweils zu bewegenden Artikel 28 einen längeren oder kürzeren Weg zurücklegen können, was einen variablen Anschluss und eine flexibel veränderbare Übergabestelle zu einer nachfolgenden Handhabungseinrichtung 16 bzw. 18 erlaubt. Bei einer solchen Steuerung der Handhabungseinrichtungen 16 und 18 ist zusätzlich darauf zu achten, dass die Bewegungs- und Überdeckungsbereiche 32, 34 und 36 der Handhabungseinrichtungen 16 und 18 unter permanenter Vermeidung von Kollisionen mit benachbarten Handhabungseinrichtungen gesteuert und/oder variiert werden. Diese flexible Anpassung der Bewegungs- und Überdeckungsbereiche 32, 34 und 36 erlaubt eine höhere Fördergeschwindigkeit der Horizontalfördereinrichtung 22, da die Artikel 28 bei unveränderten Bewegungs- und/oder Rotationsgeschwindigkeiten der einzelnen Manipulatoren 26 schneller in die gewünschten Positionen zur Erzeugung der stapelbaren Artikellagen 30 gebracht werden können.

So können die Bewegungsbereiche 32 und 34 der zwei oder mehr Handhabungseinrichtungen 16 und 18 wahlweise an einer starren Grenze aneinander anschließen (nicht gezeigt) oder einen definierten Überdeckungsbereich 36 aufweisen (Fig. 5a). Dieser Überdeckungsbereich 36 kann je nach Bedarf größer ausfallen, bspw. durch Ausdehnung des Bewegungsbereichs 34 der zweiten Handhabungseinrichtung 18 (Fig. 5b), wobei wahlweise der Bewegungsbereich 32 der ersten Handhabungseinrichtung 16 unverändert bleiben (Fig. 5b), größer oder kleiner ausfallen kann. Diese in den Figuren 5a und 5b angedeutete Variabilität der Bewegungsbereiche 32 und 34 kann wahlweise zu einer permanenten Anpassung und Veränderung genutzt werden, die sich programmgesteuert am tatsächlichen Bedarf der jeweiligen Artikelsituation richten kann.

Auch der Fall einer defekten Handhabungseinrichtung kann durch eine solche Programmsteuerung abgedeckt sein, wie es die Fig. 5c andeutet. Hierbei muss der Bewegungsbereich 32 einer verbleibenden von mehreren Handhabungseinrichtungen deutlich vergrößert und die Fördergeschwindigkeit der Horizontalfördereinrichtung 20 deutlich reduziert werden, um die Funktionalität der Vorrichtung 10 und des Förderabschnittes 12 unverändert aufrechterhalten zu können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung, Vorrichtung zur Förderung, Handhabung, Gruppierung, Palettierung und/oder Verpackung
- 12: Förderabschnitt
- 14: Anordnung
- 16: erste Handhabungseinrichtung
- 16a: erste Handhabungseinrichtung
- 16b: erste Handhabungseinrichtung
- 18: zweite Handhabungseinrichtung
- 18a: zweite Handhabungseinrichtung
- 18b: zweite Handhabungseinrichtung
- 20: Förderrichtung
- 21: Zuförderrichtung
- 22: Horizontalfördereinrichtung
- 24: Rahmen
- 26: Manipulator, Manipulationselement
- 28: Artikel
- 30: Lagenformation
- 32: erster Bewegungsraum, erster Bewegungsbereich
- 34: zweiter Bewegungsraum, zweiter Bewegungsbereich
- 36: Überdeckungsbereich
- 38: Fördertisch
- 40: Umlenkung, rechtwinkelige Umlenkung
- 42: Zuförderung, Zufördereinrichtung
- 44: Stützabschnitt
- 46: Querschieber
- 48: Schieberelemente, Schieberpaar
- 50: Greiferkopf
- 52: Greifstäbe, Greiffinger
- 54: Schieberpaar
- 56: Querschieber
- 58: Schienenelement
- 60: Zahnradantrieb
- 62: Schienensystem
- 64: Linearantrieb

## Patentansprüche

1. Einem Förderabschnitt (12) einer Vorrichtung (10) zur Förderung, Handhabung, Gruppierung, Palettierung und/oder Verpackung von Artikeln (28), Stückgütern, Gruppierungen und/oder Gebinden zugeordnete Anordnung (14) mit wenigstens zwei Handhabungseinrichtungen (16, 18), die jeweils einen entlang einer Förderrichtung (20) einer Horizontalfördereinrichtung (22) beweglichen Rahmen (24) mit wenigstens einem daran beweglich angeordneten oder aufgehängten Manipulationselement (26) zur Handhabung, Verschiebung oder sonstigen Wechselwirkung von/mit auf einer Auflage- und/oder Förderebene der Horizontalfördereinrichtung (22) transportierten Artikeln (28), Stückgütern, Gruppierungen und/oder Gebinden aufweisen, wobei die Handhabungseinrichtungen (16, 18) unabhängig voneinander bewegbar sind, wobei sich die Bewegungsräume (32, 34) der Handhabungseinrichtungen (16, 18) unter Ausbildung von Überdeckungsbereichen (36) zumindest teilweise überdecken und wobei die Bewegungsräume (32, 34) und Überdeckungsbereiche (36) durch Bewegungssteuerungen der Handhabungseinrichtungen (16, 18) dynamisch anpassbar sind, **dadurch gekennzeichnet, dass** sich der Rahmen (24) jeder Handhabungseinrichtung (16, 18) beidseitig der Längsseiten der Horizontalfördereinrichtung (22) abstützt und dort verschiebbar und/oder rollbar gelagert ist, wobei der Rahmen (24) jeder Handhabungseinrichtung (16, 18) gesteuert mittels Antriebseinrichtungen in oder entgegen der Förderrichtung (20) verfahrbar ist und wobei mittels eines Steuerprogramms die Handhabungseinrichtungen (16, 18) unter Vermeidung von Kollisionen derart steuerbar sind, dass die zu handhabenden Artikel (28), Stückgüter, Gruppierungen und/oder Gebinde an flexibel veränderbaren Übergabestellen von einer Handhabungseinrichtung (16, 18) an eine nachfolgende Handhabungseinrichtung (16, 18) übergebbar sind.

2. Anordnung nach Anspruch 1, bei welcher der Rahmen (24) jeder Handhabungseinrichtung (16, 18) und der Förderabschnitt (12) jeweils mit korrespondierenden, zusammenwirkenden Längsführungen (58, 62) und Antriebseinrichtungen (60, 64) zur steuerbaren Längsbewegung der Handhabungseinrichtungen (16, 18) parallel zur Förderrichtung (20) der Horizontalfördereinrichtung (22) ausgestattet sind.

3. Anordnung nach Anspruch 1 oder 2, bei der die Antriebseinrichtungen (60, 64) jeweils einen mechanischen und/oder elektromagnetischen Antrieb umfassen.

4. Anordnung nach einem der Ansprüche 1 bis 3, bei der das wenigstens eine Manipulationselement (26) wenigstens einen Greifer (50) und/oder wenigstens einen Schieber (54, 56) o. dgl. bewegliches Element umfasst, dessen/deren Bewegungsbereich sich innerhalb des Förderbereichs und oberhalb der Förderebene der Horizontalfördereinrichtung (22) befindet.

5. Anordnung nach einem der Ansprüche 1 bis 4, bei der zumindest eine der wenigstens zwei Handhabungseinrichtungen (16, 18) von der Vorrichtung (10) abnehmbar und von dieser trennbar ist.

6. Verfahren zur Steuerung einer Anordnung (14) mit wenigstens zwei unabhängig voneinander bewegbaren Handhabungseinrichtungen (16, 18), die einem Förderabschnitt (12) einer Vorrichtung (10) zur Förderung, Handhabung, Gruppierung, Palettierung und/oder Verpackung von Artikeln (28), Stückgütern, Gruppierungen und/oder Gebinden zugeordnet sind, wobei die auf einer Auflage- und/oder Förderebene einer Horizontalfördereinrichtung (22) transportierten Artikel (28), Stückgüter, Gruppierungen und/oder Gebinde mittels zwei oder mehr Handhabungseinrichtungen (16, 18) mit jeweils einem entlang einer Förderrichtung (20) der Horizontalfördereinrichtung (22) beweglichen Rahmen (24) und wenigstens einem daran beweglich angeordneten oder aufgehängten Manipulationselement (26) gehandhabt, verschoben oder bewegt werden, wobei sich die zwei oder mehr Handhabungseinrichtungen (16, 18) jeweils innerhalb von sich unter Ausbildung von Überdeckungsbereichen (36) zumindest teilweise gegenseitig überdeckenden Bewegungsräumen (32, 34) variabler Länge und/oder mit Überdeckungsbereichen (36) variabler Länge bewegen und wobei die Bewegungs- und Überdeckungsbereiche (32, 34, 36) dynamisch angepasst werden, **dadurch gekennzeichnet, dass** die Rahmen (24) beidseits der Längsseiten der Horizontalfördereinrichtung (22) abgestützt und rollbar und/oder verschiebbar gelagert und mit einer Antriebseinrichtung ausgestattet sind, wobei die Bewegungssteuerungen der zwei oder mehr Handhabungseinrichtungen (16, 18) jeweils programmgesteuert in einer Weise aufeinander abgestimmt sind, dass sich die Manipulations-, Dreh- und/oder Verschiebewege für die zu handhabenden Artikel (28), Stückgüter, Gruppierungen und/oder Gebinde zumindest bei jeweils benachbarten Handhabungseinrichtungen (16, 18) flexibel und/oder mit variabel definierbaren Übergabestellen aneinander anschließen, an welchen Übergabestellen Artikel von einer Handhabungseinrichtung (16, 18) an eine weitere Handhabungseinrichtung (16, 18) übergeben werden, und wobei die Bewegungs- und Überdeckungsbereiche (32, 34, 36) der Handhabungseinrichtungen (16, 18) unter Vermeidung von Kollisionen benachbarter Handhabungseinrichtungen (16, 18) gesteuert und/oder variiert werden.

7. Verfahren nach Anspruch 6, bei dem sich zwei benachbarte Handhabungseinrichtungen (16, 18) innerhalb von Bewegungsräumen (32, 34) bewegen, die sich jeweils parallel zur Förderrichtung (20) der Horizontalfördereinrichtung (22) erstrecken.

8. Verfahren nach Anspruch 6 oder 7, wobei die Bewegungs- und Überdeckungsbereiche (32, 34, 36) permanent oder in vorgebbaren Zyklen anpassbar und veränderbar sind.

9. Verfahren nach einem der Ansprüche 6 bis 8, bei dem zumindest eine der wenigstens zwei Handhabungseinrichtungen (16, 18) von der Vorrichtung (10) trennbar ist.

## Claims

1. An arrangement (14) associated with a conveyor section (12) of an apparatus (10) for conveying, handling, grouping, palletizing and/or packaging articles (28), piece goods, groupings and/or bundles, having at least two handling devices (16, 18), each of which having a frame (24) movable along a conveying direction (20) of a horizontal conveyor device (22) and at least one manipulation element (26) movably arranged or suspended thereon for handling, displacement or other interaction of/with articles (28), piece goods, groupings and/or bundles transported on a support and/or conveyor plane of the horizontal conveyor device (22), wherein the handling devices (16, 18) are movable independently of one another, wherein the movement spaces (32, 34) of the handling devices (16, 18) at least partially overlap, forming overlapping regions (36), and wherein the movement spaces (32, 34) and overlapping regions (36) are dynamically adaptable by means of movement controls of the handling devices (16, 18), **characterized in that** the frame (24) of each handling device (16, 18) is supported on both sides of the longitudinal sides of the horizontal conveyor device (22) and is mounted there so as to be movable and/or rollable, wherein the frame (24) of each handling device (16, 18) can be moved controlled by means of drive devices in or counter to the conveying direction (20), and wherein the handling devices (16, 18) can be controlled by means of a control program while avoiding collisions in such a way that the articles (28), piece goods, groupings and/or bundles to be handled can be transferred from a handling device (16, 18) to a subsequent handling device (16, 18) at flexibly variable transfer points.

2. The arrangement as recited in claim 1, in which the frame (24) of each handling device (16, 18) and the conveyor section (12) are each equipped with corresponding, cooperating longitudinal guides (58, 62) and drive devices (60, 64) for controllable longitudinal movement of the handling devices (16, 18) parallel to the conveying direction (20) of the horizontal conveyor device (22).

3. The arrangement as recited in claim 1 or 2, in which the drive devices (60, 64) each comprise a mechanical and/or electromagnetic drive.

4. The arrangement as recited in one of the claims 1 to 3, in which the at least one manipulation element (26) comprises at least one gripper (50) and/or at least one slider (54, 56) or the like movable element, the movement range of which is located within the conveying region and above the conveyor plane of the horizontal conveyor device (22).

5. The arrangement as recited in one of the claims 1 to 4, in which at least one of the at least two handling devices (16, 18) can be removed from and separated from the apparatus (10).

6. A method for controlling an arrangement (14) having at least two independently movable handling devices (16, 18), which are assigned to a conveyor section (12) of an apparatus (10) for conveying, handling, grouping, palletizing and/or packaging articles (28), piece goods, groupings and/or bundles, wherein the articles (28), piece goods, groupings and/or bundles transported on a support and/or conveyor plane of a horizontal conveyor device (22) are handled, displaced or moved by means of two or more handling devices (16, 18), each of which having a frame (24) movable along a conveying direction (20) of the horizontal conveyor device (22) and at least one manipulation element (26) movably arranged or suspended thereon, wherein the two or more handling devices (16, 18) each move within at least partially mutually overlapping movement spaces (32, 34) of variable length and/or with overlapping regions (36) of variable length while forming overlapping regions (36), and wherein the movement and overlapping regions (32, 34, 36) are dynamically adapted, **characterized in that** the frames (24) are supported on both sides of the longitudinal sides of the horizontal conveyor device (22) and are mounted in a rollable and/or displaceable manner and are equipped with a drive device, wherein the movement controls of the two or more handling devices (16, 18) each are program-controlled and coordinated with one another in such a way that the manipulation, rotation and/or displacement paths for the articles (28), piece goods, groupings and/or bundles to be handled, flexibly join one another at least at respectively adjacent handling devices (16, 18) and/or with variably definable transfer points, at which transfer points articles are transferred from a handling device (16, 18) to a further handling device (16, 18), and wherein the movement and overlapping regions (32, 34, 36) of the handling devices (16, 18) are controlled and/or varied while avoiding collisions of adjacent handling devices (16, 18).

7. The method as recited in claim 6, in which two adjacent handling devices (16, 18) move within movement spaces (32, 34) which each extend parallel to the conveying direction (20) of the horizontal conveyor device (22).

8. The method as recited in claim 6 or 7, wherein the movement and overlapping regions (32, 34, 36) are adjustable and variable permanently or in predeterminable cycles.

9. The method as recited in one of the claims 6 to 8, in which at least one of the at least two handling devices (16, 18) can be separated from the apparatus (10).

## Revendications

1. Ensemble (14) qui est associé à une section de transport (12) d'un dispositif (10) de transport, de manipulation, de groupement, de palettisation et/ou d'emballage d'articles (28), de produits de détail, de groupements et/ou de multipacks et qui comprend au moins deux dispositifs de manipulation (16, 18) qui présentent chacun un cadre (24) apte à être déplacé le long d'une direction de transport (20) d'un dispositif de transport horizontal (22) et comprenant au moins un élément de manipulation (26) disposé ou suspendu de manière mobile sur celui-ci et destiné à manipuler, à déplacer ou à interagir d'une autre manière avec des articles (28), produits de détail, groupements et/ou multipacks transportés sur un plan d'appui et/ou de transport dudit dispositif de transport horizontal (22), dans lequel les dispositifs de manipulation (16, 18) sont mobiles indépendamment l'un de l'autre, dans lequel les espaces de mouvement (32, 34) des dispositifs de manipulation (16, 18) se chevauchent au moins en partie en formant des zones de chevauchement (36) et dans lequel les espaces de mouvement (32, 34) et les zones de chevauchement (36) peuvent être adaptés dynamiquement par des commandes de mouvement des dispositifs de manipulation (16, 18), **caractérisé par le fait que** le cadre (24) de chaque dispositif de manipulation (16, 18) s'appuie de part et d'autre des côtés longitudinaux du dispositif de transport horizontal (22) et y est logé de manière à pouvoir être déplacé et/ou rouler, dans lequel le cadre (24) de chaque dispositif de manipulation (16, 18) peut être déplacé de manière commandée, par le biais de dispositifs d'entraînement, dans ou à l'encontre de la direction de transport (20), et dans lequel les dispositifs de manipulation (16, 18) sont commandables au moyen d'un programme de commande, tout en évitant des collisions, de telle manière que les articles (28), produits de détail, groupements et/ou multipacks à manipuler peuvent être transférés, sur des points de transfert modifiables de manière flexible, d'un dispositif de manipulation (16, 18) à un dispositif de manipulation (16, 18) suivant.

2. Ensemble selon la revendication 1, dans lequel le cadre (24) de chaque dispositif de manipulation (16, 18) et la section de transport (12) sont équipés chacun de guides longitudinaux (58, 62) correspondants agissant de concert les uns avec les autres ainsi que de dispositifs d'entraînement (60, 64) pour le mouvement longitudinal commandable des dispositifs de manipulation (16, 18), parallèle à la direction de transport (20) du dispositif de transport horizontal (22).

3. Ensemble selon la revendication 1 ou 2, dans lequel les dispositifs d'entraînement (60, 64) comprennent chacun un mécanisme d'entraînement mécanique et/ou électromagnétique.

4. Ensemble selon l'une quelconque des revendications 1 à 3, dans lequel ledit au moins un élément de manipulation (26) comprend au moins un organe de préhension (50) et/ou au moins un coulisseau (54, 56) ou un élément mobile similaire dont la zone de mouvement est située à l'intérieur de la zone de transport et au-dessus du plan de transport du dispositif de transport horizontal (22).

5. Ensemble selon l'une quelconque des revendications 1 à 4, dans lequel l'un au moins desdits au moins deux dispositifs de manipulation (16, 18) peut être détaché du dispositif (10) et être séparé de celui-ci.

6. Procédé de commande d'un ensemble (14) comprenant au moins deux dispositifs de manipulation (16, 18) qui peuvent être déplacés indépendamment les uns des autres et qui sont associés à une section de transport (12) d'un dispositif (10) de transport, de manipulation, de groupement, de palettisation et/ou d'emballage d'articles (28), de produits de détail, de groupements et/ou de multipacks, dans lequel les articles (28), produits de détail, groupements et/ou multipacks qui sont transportés sur un plan d'appui et/ou de transport d'un dispositif de transport horizontal (22) sont manipulés, déplacés ou mus au moyen de deux ou plusieurs dispositifs de manipulation (16, 18) comprenant chacun un cadre (24) déplaçable le long d'une direction de transport (20) du dispositif de transport horizontal (22) ainsi qu'au moins un élément de manipulation (26) disposé ou suspendu de manière mobile sur celui-ci, dans lequel les deux ou plusieurs dispositifs de manipulation (16, 18) se déplacent chacun à l'intérieur d'espaces de mouvement (32, 34) de longueur variable qui se chevauchent au moins en partie en formant des zones de chevauchement (36), et/ou avec des zones de chevauchement (36) de longueur variable, et dans lequel les zones de mouvement et de chevauchement (32, 34, 36) sont adaptées dynamiquement, **caractérisé par le fait que** les cadres (24) sont appuyés de part et d'autre des côtés longitudinaux du dispositif de transport horizontal (22) et y sont logés de manière à pouvoir rouler et/ou à pouvoir être déplacés et qu'ils sont équipés d'un dispositif d'entraînement, dans lequel les commandes de mouvement des deux ou plusieurs dispositifs de manipulation (16, 18) sont accordées respectivement entre elles, en étant commandées par programme, de telle manière que les chemins de manipulation, de rotation et/ou de déplacement pour les articles (28), produits de détail, groupements et/ou multipacks à manipuler, au moins dans le cas de dispositifs de manipulation (16, 18) respectivement voisins, sont contigus les uns aux autres de façon flexible et/ou avec des points de transfert définissables de manière variable; sur lesquels points de transfert, des articles sont transférés d'un dispositif de manipulation (16, 18) à un autre dispositif de manipulation (16, 18), et dans lequel les zones de mouvement et de chevauchement (32, 34, 36) des dispositifs de manipulation (16, 18) sont commandées et/ou variées tout en évitant des collisions de dispositifs de manipulation (16, 18) voisins.

7. Procédé selon la revendication 6, dans lequel deux moyens de manipulation (16, 18) voisins se déplacent à l'intérieur d'espaces de mouvement (32, 34) qui s'étendent chacun parallèlement à la direction de transport (20) du dispositif de transport horizontal (22).

8. Procédé selon la revendication 6 ou 7, dans lequel les zones de mouvement et de chevauchement (32, 34, 36) sont adaptables et modifiables de manière permanente ou dans des cycles prédéterminables.

9. Procédé selon l'une quelconque des revendications 6 à 8, dans lequel l'un au moins desdits au moins deux dispositifs de manipulation (16, 18) peut être séparé du dispositif (10).
